(19) Europäisches Patentamt
European Patent Office
Office européen des brevets

(11) Publication number: **0 062 123**
**B1**

(12) # EUROPEAN PATENT SPECIFICATION

(45) Date of publication of patent specification: **02.07.86**

(51) Int. Cl.4: **C 01 B 33/28**, C 01 B 33/26

(21) Application number: **81301529.4**

(22) Date of filing: **08.04.81**

(54) **De-aluminization of aluminosilicates.**

(43) Date of publication of application:
**13.10.82 Bulletin 82/41**

(45) Publication of the grant of the patent:
**02.07.86 Bulletin 86/27**

(84) Designated Contracting States:
**BE DE FR GB IT NL**

(56) References cited:
**DE-A-2 510 740**
**GB-A-2 002 733**
**US-A-1 866 731**
**US-A-3 442 795**
**US-A-3 594 331**
**US-A-3 640 681**
**US-A-3 691 099**
**US-A-4 093 560**
**US-A-4 096 234**

(73) Proprietor: **MOBIL OIL CORPORATION**
**150 East 42nd Street**
**New York New York 10017 (US)**

(72) Inventor: **Chang, Clarence Dayton**
**11 Murray Place**
**Princeton New Jersey 08540 (US)**

(74) Representative: **Cooper, John Anthony et al**
**CARPMAELS & RANSFORD 43 Bloomsbury Square**
**London WC1A 2RA (GB)**

**EP 0 062 123 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the removal of aluminum from crystalline aluminosilicate zeolites.

Considerable effort has been devoted to the improvement of natural and synthetic aluminum-containing oxides such as clays, gels, aluminosilicates and the like with regard to pore structure, crystalline form, catalytic and adsorptive activity and thermal, hydrothermal and acid stability. Substantial incentive for this endeavor results from the broad application that such compositions have found as adsorbents, catalysts and ion exchange media in numerous chemical and hydrocarbon conversion and process systems. It is often the case that the chemical, physical and catalytic properties of these materials deteriorate on exposure to process environments, particularly those involving elevated temperatures, acidic process media or contact with steam. For example, the crystallinity and catalytic activity of aluminosilicate hydrocracking catalysts are known to deteriorate on exposure to repeated regeneration which often involves exposing the catalyst to an extreme temperature capable of burning off deposited coke and residual hydrocarbon. The regeneration of such cracking catalysts generally requires that the catalyst be able to withstand steam and/or thermal atmospheres at temperatures in a range of 704—927°C (1,300°—1,700°F). These compositions must also be able to withstand the chemically degrading influence of acidic materials such as the sulfur and nitrogen oxides encountered during regeneration of some systems.

One factor that is known to influence the tolerance of crystalline aluminosilicates to acidic and thermal environments is the structural silica to alumina mole ratio. The value of procedures that are effective in increasing this ratio is therefore readily apparent.

In synthetic crystalline aluminosilicate zeolites, the silica to alumina mole ratio is essentially determined by the nature of the starting materials and the relative quantities of such materials used in the preparation of the zeolite. Some variation in the silica to alumina mole ratio can be obtained by changing the proportion of reactants, e.g., increasing the relative concentration of the silica precursor relative to the alumina precursor. However, definite limits in the maximum obtainable silica to alumina mole ratio are observed. For example, synthetic faujasites having a silica to alumina mole ratio of about 5.2 to 5.6 can be obtained by increasing the relative proportion of the silica precursor. However, when the silica proportion is increased to even higher levels no commensurate increase in the silica to alumina mole ratio of the crystallized synthetic faujasite is observed. Thus, the silica to alumina mole ratio of about 5.6 must be considered an upper limit in a preparative process using conventional reagent. Corresponding upper limits in the silica to alumina mole ratio of mordenite and erionite via the synthetic pathway are also observed.

Accordingly, attempts to increase the silica to alumina mole ratio of crystalline zeolites by removal of aluminum from the crystal structure with strong acids have heretofore been reported. The silica to alumina mole ratio of zeolites have been increased by converting the parent zeolite at least partially to its hydrogen form, hydrolyzing the aluminum to aluminum hydroxide, and thereafter physically removing the displaced aluminum. U.S. Specifications 3,442,795, 4,093,560, 3,691,099, and 3,640,681 describe techniques for removing aluminum from such zeolites. DE—A—2,510,740 describes removal of aluminum chloride from zeolites using chlorine or hydrochloric acid gas.

The instant invention concerns a process for the de-aluminization of crystalline aluminosilicate zeolites, comprising contacting the hydrogen form of the aluminosilicate at elevated temperature with an inorganic halide or oxyhalide comprising a halogen and a non-halogen component which latter is capable of substitution for aluminum in the aluminosilicate structure, forming an aluminum halide, introducing said non-halogen component into the aluminosilicate structure, and volatilizing and removing the formed aluminum halide.

The aluminosilicates can thus be dealuminized without substantially destroying their structure. Zeolites are subjected to the process of the invention in the hydrogen form in order to eliminate the possibility of reaction between metal cations and the halide. The invention is particularly useful for the dealuminization of large pore zeolites such as ZSM-20, and also for the dealuminization of zeolites beta ZSM-5, ZSM-11, ZSM-12 and natural and synthetic faujasites and mordenites. The zeolites to which the invention has application are characterised by having a constraint index below 12 and a pore dimension (in the case of zeolites having non-circular pores a major pore dimension) greater than 5 nm. Constraint index is defined in our GB Specification 1,446,522.

The halogen component of the inorganic halides and oxyhalides utilized in the present invention is chlorine, bromine or iodine. The order of preference for these halogens is the order of the boiling points of the resultant aluminum halide formed, with the halogen with the corresponding lowest boiling point being preferred: namely chlorine; bromine; iodine.

Useful inorganic halides and oxyhalides include $SiCl_4$, $PCl_3$, $TiCl_4$, and $CrO_2Cl_2$.

The temperature at which the de-aluminization is practised must be high enough to effect removal through vaporization of the aluminum halide formed. Minimum temperatures to effect this vaporization depend on which halogen component is used. The following table (Table 1) gives suitable temperature ranges for the de-aluminization process of the present invention.

TABLE 1

| Halogen | Temperature ranges, °C Preferred | More preferred |
|---|---|---|
| Chlorine | 140—760 | 180—600 |
| Bromine | 150—800 | 260—700 |
| Iodine | 250—800 | 380—700 |

Thus to volatilize $Al_2Cl_6$ a temperature of at least about 140°C is required; to volatilize $Al_2Br_6$ a temperature of at least about 150°C is required; and to volatilize $Al_2I_6$ a temperature of at least about 250°C is required.

The following reaction between aluminum (as $Al_2O_3$) and $SiCl_4$ typifies the novel process of the instant invention:

$$Al_2O_3 + \frac{3}{2} SiCl_4 \xrightarrow{heat} Al_2Cl_6\uparrow + \frac{3}{2} SiO_2$$

The removal of Al tends to give greater stability. The non-halogen component of the halide or oxyhalide is deposited at the site previously occupied by the aluminum, in which case the invention would lead to enhanced stabilization since the vacancy left by the Al is "filled" with another atom or molecule. Furthermore, this method can be used to introduce different atoms into the aluminosilicate structure, thus modifying catalytic function.

The improved characteristics of aluminosilicates treated in accordance with this invention, particularly those relating to increased $SiO_2/Al_2O_3$ mole ratios and hydrothermal stability, renders them particularly attractive for application in a number of processes, as ion exchange media, catalysts or catalyst supports in the conversion of organic compounds, particularly hydrocarbons. Exemplary of hydrocarbon conversion systems in which these compositions are particularly suitable are hydrocracking; cracking; hydrofining, e.g., desulfurization and denitrogenation; isomerization; polymerization; alkylation; reforming; hydrogenation; dehydrogenation; and the like. Typical catalytic applications of such compositions is in the conversion of hydrocarbons by hydrofining and hydrocracking in which case the described aluminosilicates should contain a catalytically active amount of hydrogenation component such as the Group VI or Group VIII metals, oxides and sulfides. By using members of Groups IB, IIB, IV, V, VI and VIII with said aluminosilicates, other reactions can be carried out such as CO hydrogenation and oxidation; hydrocarbon oxidation, halogenation and nitration; and olefin hydration, merely to name a few.

It is also preferable when employing these aluminosilicates as catalysts or catalyst supports to render them in the form of relatively stable aggregates, e.g. pellets, tablets, extrudates and the like. The use of an added binder composition is usually preferred to improve the structural properties of the resultant aggregate. The binder compositions most commonly employed for aluminosilicates of this nature comprise predominantly alumina, certain forms of alumina being particularly preferred.

The following examples will serve to illustrate the invention without limiting same.

Example 1

This example illustrates the preparation of a HZSM-5 zeolite with a silica to alumina mole ratio of about 40.

A sodium silicate solution was prepared by mixing 8.4 parts water and 14.4 parts sodium silicate (28.7 wt.% $SiO_2$, 8.9 wt.% $Na_2O$, 62.4% $H_2O$) followed by addition of 0.04 parts Daxad 27 (W. R. Grace Chem. Co.). The solution was cooled to approximately 15°C.

An acid solution was prepared by adding 1 part aluminum sulfate (17.2 wt.% $Al_2O_3$) to 8.6 parts water followed by .96 parts sulfuric acid (93 wt.% $H_2SO_4$) and 0.6 parts NaCl.

These solutions were mixed in an agitated vessel while 2.1 parts of NaCl and 0.4 parts $H_2O$ were added. The gel molar ratios expressed as oxides are the following:

$$SiO_2/Al_2O_3 = 40.6$$
$$Na_2O/Al_2O_3 = 52.1$$

An organic solution was prepared by adding 0.8 parts n-propyl bromide and 1.6 parts methyl ethyl ketone to 1.0 parts tri-n-propylamine and added to the gel.

The mixture was reacted at 104°C (220°F) without agitation for 6 hours, 151 hrs with severe agitation and at 160°C (320°F) with severe agitation for 3 hours.

The zeolite slurry product was diluted with 4—5 parts water per part slurry and 0.0002 parts of flocculent (Rohm & Haas Primafloc C-7) per part slurry, allowed to settle and supernatant liquid was drawn

off. The settled solids were reslurried to the original volume of the preceding step with water and 0.00005 parts of flocculent per part slurry. After settling, the aqueous phase was decanted. This procedure was repeated until the decant supernatant liquid was chlorine free. The washed zeolite was then filtered, dried and identified as ZSM-5 having a silica/alumina mole ratio of at least 12; i.e. about 40, and a constraint index of between 1 and 12; i.e., about 8.3.

The dried zeolite product was calcined in flowing $N_2$ for 3 hours at 538°C then ion exchanged twice with 1N $NH_4NO_3$ solution (5 parts $NH_4NO_3$ solution/1 part zeolite) for 1 hour at ambient temperature and dried at about 120°C.

Example 2

The HZSM-5 zeolite prepared according to the procedure of Example 1 was treated with 250 torr $SiCl_4$ at 532°C in a transport reactor. The use of a transport reactor is described by H. Schafer in Chemical Transport Reactions, Academic Press, N.Y., 1964. The de-aluminization of this zeolite is demonstrated below in Table 2.

TABLE 2

| Time, hr | Wt.% | % $Al_2O_3$ | $SiO_2/Al_2O_3$ | % De-aluminization |
|---|---|---|---|---|
| 0 | — | 3.89 | 39.4 | 0 |
| 24 | −5.4 | 3.87 | 41.1 | 0.5 |
| 94 | −0.9 | 1.65 | 93.7 | 57.6 |
| 123 | −0.2 | 1.54 | 99.7 | 60.4 |

Example 3

This example illustrates the preparation of a HZSM-5 zeolite with a silica to alumina mole ratio of about 70.

A sodium solution was prepared by mixing 16 parts water and 27.7 parts sodium silicate (28.7 wt.% $SiO_2$, 8.9 wt.% $Na_2O$, 62.4% $H_2O$). The solution was cooled to approximately 15°C.

An acid solution was prepared by adding 1 part aluminum sulfate (17.2 wt.% $Al_2O_3$) to 16.4 parts water followed by 2.4 parts sulfuric acid (93 wt.% $H_2SO_4$) and 1.2 parts NaCl.

These solutions were mixed in an agitated vessel while 3.9 parts of NaCl were added. The gel molar ratios expressed as oxides are the following:

$$SiO_2/Al_2O_3=78.4$$
$$Na_2O/Al_2O_3=49.9$$

An organic solution was prepared by adding 1.6 parts n-propyl bromide and 3.1 parts methyl ethyl ketone to 1.9 parts tri-n-propylamine.

After the gel was heated to about 95°C, agitation was reduced and the organic solution was added above the gel. This mixture was held at about 95—110°C for 14 hours, then agitation increased and the temperature was increased to about 150—160°C and then held there until crystallization was complete. Unreacted organics were removed by flashing and the remaining contents cooled.

The zeolite slurry product was diluted with 4—5 parts water per part slurry, allowed to settle and supernatant liquid was drawn off. The settled solids were reslurried to the original volume of the preceding step with water. After settling, the aqueous phase was decanted. This procedure was repeated until the sodium level of the zeolite was less than 1.0 wt.%. The washed zeolite was then filtered, dried and identified as ZSM-5 having a silica/alumina mole ratio of at least 12; i.e., about 70, and a constraint index between 1 and 12; i.e., about 8.3.

Example 4

The HZSM-5 zeolite prepared according to the procedure of Example 3 was treated with 0.3 bar $SiCl_4$ at 540°C in a transport reactor. Increase in the silica to alumina mole ratio is shown in Table 3 below.

TABLE 3

| Hours on stream | Silica to alumina mole ratio |
|---|---|
| 0 | 70 |
| 48 | 218 |
| 314 | 784 |

As can be seen from Table 3, after about 300 hours there was greater than a tenfold increase in the silica to alumina mole ratio.

Example 5

This example demonstrates directly the reaction of aluminum (as $Al_2O_3$) and $SiCl_4$. A sample of gamma-$Al_2O_3$ from American Cyanamid Aero. Cat. was treated at about 540°C in a transport reactor. After 71 hours the treated material was analyzed to be 13.2% $SiO_2$, while the sublimed material was analyzed as 36.9% $Al_2O_3$.

Example 6

A sample of H-mordenite (Zeolon series, Norton Company, $SiO_2/Al_2O_3$=12.2) was treated at about 540°C in a transport reactor for a period for one week with about 1 bar $SiCl_4$. Analysis of the treated material revealed a 20.2% de-aluminization.

**Claims**

1. A process for removing aluminum from crystalline aluminosilicate zeolites having a constraint index below 12 and a major pore dimension greater than 5 nm which comprises contacting the hydrogen form of the aluminosilicate at elevated temperature with an inorganic halide or oxyhalide comprising a halogen and a non-halogen component which latter is capable of substitution for aluminium in the aluminosilicate structure, forming an aluminum halide, introducing said non-halogen component into the aluminosilicate structure, and volatilizing and removing the formed aluminum halide.

2. The process of claim 1 wherein the halogen is chlorine, bromine or iodine.

3. The process of claim 2 wherein the halogen is chlorine and the temperature is between 140°C and 760°C.

4. The process of claim 3 wherein the temperature is between 180°C and 600°C.

5. The process of claim 2 wherein the halogen is bromine and the temperature is between 150°C and 800°C.

6. The process of claim 5 wherein the temperature is between 260°C and 700°C.

7. The process of claim 2 wherein the halogen is iodine and the temperature is between 250°C and 800°C.

8. The process of claim 7 wherein the temperature is between 380°C and 700°C.

9. The process of any preceding claim wherein the inorganic halide is $SiCl_4$.

10. The process of any preceding claim wherein the zeolite is ZSM-5, ZSM-11, ZSM-12, ZSM-20, a faujasite or mordenite.

**Patentansprüche**

1. Verfahren zur Entaluminisierung von kristallinen Aluminosilikat-Zeolithin mit einem Zwangsindex von weniger als 12 und einer Hauptporenabmessung von größer als 5 nm, welches das Inkontaktbringen der Wasserstofform des Aluminosilikats bei erhöhter Temperatur mit einem anorganischen Halogenid oder Oxyhalogenid, das ein Halogen und eine Nichthalogen-Komponente umfaßt, wobei die letztere zur Substitution des Aluminiums in der Aluminosilikatstruktur in der Lage ist, Bildung eines Aluminiumhalogenids, Eingeben der Nichthalogen-Komponente in die Aluminosilikatstruktur und Verflüchtigen und Entfernen des gebildeten Aluminiumhalogenids umfaßt.

2. Verfahren nach Anspruch 1, worin das Halogen, Chlor, Brom oder Jod ist.

3. Verfahren nach Anspruch 2, worin das halogen Chlor ist und die Temperatur zwischen 140 und 760°C liegt.

4. Verfahren nach Anspruch 3, worin die Temperatur zwischen 180 und 600°C liegt.

5. Verfahren nach Anspruch 2, worin das Halogen Brom ist und die Temperatur zwischen 150 und 800°C liegt.

6. Verfahren nach Anspruch 5, worin die Temperatur zwischen 260 und 700°C liegt.

7. Verfahren nach Anspruch 2, worin das Halogen Jod ist und die Temperatur zwischen 250 und 800°C liegt.

8. Verfahren nach Anspruch 7, worin die Temperatur zwischen 380 und 700°C liegt.

9. Verfahren nach einem der vorstehenden Ansprüche, worin das anorganischen Halogenid $SiCl_4$ ist.

10. Verfahren nach einem der vorstehenden Ansprüche, worin der Zeolith ZSM-5, ZSM-11, ZSM-12, ZSM-20, ein Faujasit oder Mordenit ist.

**Revendications**

1. Procédé d'élimination de l'aluminium contenu dans des zéolites cristallines à base d'aluminosilicate dont l'indice de contrainte est inférieur à 12 et la dimension maximale des pores est supérieure à 5 nm, qui consiste à mettre en contact la forme protonée de l'aluminosilicate à température élevée avec un halogénure ou oxyhalogénure minéral comprenant un halogène et un composant non halogène, ce dernier

étant capable de se substituer à l'aluminium dans la structure de l'aluminosilicate, à former un halogénure d'aluminium, à introduire ce composant non halogène dans la structure de l'aluminosilicate et à éliminer par vaporisation l'halogénure d'aluminium formé.

2. Procédé selon la revendication 1, dans lequel l'halogène est le chlore, le brome ou l'iode.

3. Procédé selon la revendication 2, dans lequel l'halogène est le chlore et la température est comprise entre 140°C et 760°C.

4. Procédé selon la revendication 3, dans lequel la température est comprise entre 180°C et 600°C.

5. Procédé selon la revendication 2, dans lequel l'halogène est le brome et la température est comprise entre 150°C et 800°C.

6. Procédé selon la revendication 5, dans lequel la température est comprise entre 260°C et 700°C.

7. Procédé selon la revendication 2, dans lequel l'halogène est l'iode et la température est comprise entre 250°C et 800°C.

8. Procédé selon la revendication 7, dans lequel la température est comprise entre 380°C et 700°C.

9. Procédé selon l'une quelconque des revendications précédentes, dans lequel l'halogénure minéral est $SiCl_4$.

10. Procédé selon l'une quelconque des revendications précédentes, dans lequel la zéolite est la ZSM-5, ZSM-11, ZSM-12, ZSM-20, une faujasite ou une mordénite.